**Europäisches Patentamt**

**European Patent Office**

**Office européen des brevets**

(11) Veröffentlichungsnummer: **0 338 338**

**A2**

## (12) EUROPÄISCHE PATENTANMELDUNG

(21) Anmeldenummer: **89106093.1**

(22) Anmeldetag: **07.04.89**

(51) Int. Cl.⁴: **H02B 1/08**

(30) Priorität: **19.04.88 DE 3812941**

(43) Veröffentlichungstag der Anmeldung:
**25.10.89 Patentblatt 89/43**

(84) Benannte Vertragsstaaten:
**AT BE CH DE ES FR GB GR IT LI LU NL SE**

(71) Anmelder: **Rittal-Werk Rudolf Loh GmbH & Co. KG**
**Auf dem Stützelberg**
**D-6348 Herborn(DE)**

(72) Erfinder: **Zachrei, Jürgen**
**Am Hungersberg 2**
**D-5340 Dillenburg-Nanzenbach(DE)**
Erfinder: **Debus, Jürgen**
**Am Ebersbach 50**
**D-6344 Dietzhölztal 1(DE)**

(74) Vertreter: **Vogel, Georg**
**Pat.-Ing. Georg Vogel**
**Hermann-Essig-Strasse 35**
**D-7141 Schwieberdingen(DE)**

(54) **Schaltschrank für eine Wandbefestigung.**

(57) Die Erfindung betrifft einen Schaltschrank für eine Wandbefestigung mit einem boxartigen, aus Rückwand und vier Seitenwänden bestehenden Schrankkorpus, dessen offene Seite mittels eines Schrankdeckels oder einer Schranktür verschließbar ist. Mit dünnem Ausgangsmaterial für den Schrankkorpus läßt sich dadurch eine Erhöhung der Stabilität, verbunden mit der Übernahme weiterer Befestigungsmöglichkeiten erreichen, daß in allen vier Eckbereichen auf der Innenseite der Rückwand ein Montagewinkel angebracht ist, dessen mit Gewindeaufnahmen versehene Schenkel in einer zur Rückwand parallelen und im Abstand dazu befindlichen Ebene angeordnet sind und mit den äußeren Schenkellängsseiten an den aufeinanderstoßenden Seitenwänden anliegen, daß mindestens eine äußere Schenkellängsseite eines Schenkels mit einer Aussparung zum Festlegen einer im Bereich der offenen Seite des Schrankkorpus festgeschraubten Halfenschiene versehen ist, und daß zumindest eine Gewindeaufnahme jedes Montagewinkels über eine Bohrung der Rückwand zugänglich ist.

FIG 1

## Schaltschrank für eine Wandbefestigung

Die Erfindung betrifft einen Schaltschrank für eine Wandbefestigung mit einem boxartigen, aus Rückwand und vier Seitenwänden bestehenden Schrankkorpus, dessen offene Seite mittels eines Schrankdeckels oder einer Schranktür verschließbar ist.

Bei bekannten Schaltschränken für diesen Verwendungszweck ist der Schrankkorpus in der Regel aus einem Blechzuschnitt gezogen bzw. gefaltet und zusammengesetzt. Die Dicke des verwendeten Bleches wird dabei aus Gewichts- und Kostengründen klein gehalten. Dies wirkt sich zwangsweise auf die Stabilität des Schrankkorpus aus, was gerade bei der Wandbefestigung von Nachteil ist, da die Rückwand des Schrankkorpus den Schaltschrank mit den Einbauten tragen muß.

Es ist Aufgabe der Erfindung, einen Schaltschrank der eingangs erwähnten Art zu schaffen, bei dem unter Verwendung von verhältnismäßig dünnem Ausgangsmaterial eine ausreichende Stabilität des Schrankkorpus für eine Wandbefestigung erreicht werden kann, wobei die zusätzlich erforderlichen Teile neben der Erhöhung der Stabilität weitere Befestigungsmöglichkeiten für Einbauten übernehmen können,

Diese Aufgabe wird nach der Erfindung dadurch gelöst, daß in allen vier Eckbereichen auf der Innenseite der Rückwand ein Montagewinkel angebracht ist, dessen mit Gewindeaufnahmen versehene Schenkel in einer zur Rückwand parallelen und im Abstand dazu befindlichen Ebene angeordnet sind und mit den äußeren Schenkellängsseiten an den aufeinanderstoßenden Seitenwänden anliegen, daß mindestens eine äußere Schenkellängsseite eines Schenkels mit einer Aussparung zum Festlegen einer im Bereich der offenen Seite des Schrankkorpus festgeschraubten Halfenschiene versehen ist, und daß zumindest eine Gewindeaufnahme jedes Montagewinkels über eine Bohrung der Rückwand zugänglich ist.

Die so gestalteten und mit der Rückwand verbundenen Montagewinkel bringen mit kleinem Materialmehraufwand eine ausgezeichnete Stabilität in den Bereichen des Schrankkorpus, die für die Wandbefestigung verwendet werden. Auf den Montagewinkeln kann eine Montageplatte im Abstand zur Rückwand befestigt werden und die in den Schrankkorpus eingebauten Halfenschienen werden im Bereich der Montagewinkel ohne zusätzliche Befestigungsmittel allein durch die Aussparung in der äußeren Schenkellängsseite gehalten, so daß diese nur noch im Bereich der offenen Seite des Schrankkorpus festgeschraubt werden müssen. Die Halfenschienen können an sich bekannte Einlegemuttern aufnehmen, mit deren Hilfe zusätzliche Befestigungswinkel oder dgl. auf den Innenseiten der Seitenwände befestigt werden können.

Der Abstand der Montagewinkel von der Rückwand läßt sich nach einer Ausgestaltung einfach dadurch einhalten, daß die Schenkel der Montagewinkel an ihren Schenkellängsseiten und Schenkelstirnseiten mit Abkantungen versehen sind, die sich auf der Innenseite der Rückwand abstützen, den Abstand der Schenkel zur Rückwand festlegen und zumindest teilweise mit der Rückwand verbunden, vorzugsweise verschweißt sind.

Die Verbindung der Montagewinkel mit der Rückwand ist nach einer Ausgestaltung einfach so gelöst, daß die Schenkelstirnseiten der Schenkel mit ihren Abkantungen in zur Ebene der Schenkel parallel liegende Endabschnitte auslaufen, die mit der Rückwand verbunden, vorzugsweise verschweißt sind.

Damit die mit den Montagewinkeln verschraubte Montageplatte den Zugang zu den Gewindeaufnahmen derselben nicht beeinträchtigt, ist weiterhin vorgesehen, daß zumindest ein Schenkel der Montagewinkel mit einer Abstützausprägung für eine Montageplatte versehen ist, die an der der Rückwand abgekehrten Seite des Schenkels absteht, und daß die Montageplatte im Bereich der Gewindeaufnahmen mit Ausnehmungen oder Abschrägungen versehen ist.

Nach einer bevorzugten Ausführung ist vorgesehen, daß die Abstützausprägung für die Montageplatte an dem einen Schenkel und die Aussparung für die Halfenleiste an dem anderen Schenkel des Montagewinkels jeweils im Bereich der äußeren Schenkellängsseite angeordnet sind.

Damit die Halfenschienen auf den Innenseiten von einander gegenüberliegenden Seitenwänden angebracht werden können, sieht eine Ausgestaltung vor, daß zwei Ausführungen von Montagewinkeln mit vertauschten Schenkeln verwendet sind, wobei jeweils zwei identische Montagewinkel in den auf einer Diagonalen liegenden Eckbereichen angebracht sind.

Ist vorgesehen, daß eine Gewindeaufnahme des Montagewinkels auf der Diagonalen der Schenkel angeordnet ist, dann ist gerade diese Gewindeaufnahme über eine Bohrung in der Rückwand zugänglich und läßt sich zur Anbringung von Wand-Befestigungswinkeln auf der Außenseite der Rückwand verwenden. Die Wand-Befestigungswinkel können dann in zwei um 90° verdrehten Stellungen mit der Rückwand verbunden werden und wahlweise an der einen oder anderen Seitenwand des Eckbereiches am Schrankkorpus vorstehen.

Die Verschraubung der Halfenschienen mit dem Schrankkorpus ist nach einer Ausgestaltung so gelöst, daß die offene Seite des Schrankkorpus mit einem Schließrand und einem Schließsteg versehen ist, daß die oberen Enden der Halfenschienen Einlegemuttern mit stirnseitiger Gewindeaufnahme aufnehmen und daß Befestigungsschrauben über Bohrungen im Schließrand des Schrankkorpus in die stirnseitigen Gewindeaufnahmen der Einlegemuttern eingeschraubt sind. Wird der Schrankkorpus mit einem daran angelenkten Schrankdeckel verschlossen, dann läßt sich erreichen, daß die Befestigungsschrauben zusätzlich zum Festschrauben von Scharnierteilen am Schließrand des Schrankkorpus mit verwendet sind.

Eine einfache Anbringung der Wand-Befestigungswinkel an der Rückwand ergibt sich nach einer Ausgestaltung dadurch, daß an die Rückwand von außen Z-förmige Wand-Befestigungswinkel anschraubbar sind, wobei mindestens eine Befestigungsschraube einen Schenkel desselben durch die Bohrung der Rückwand hindurch mit einer Gewindeaufnahme der Montagewinkel verschraubt, Verlängerungen des Mittelschenkels des Wand-Befestigungswinkels sich an die Außenseite einer Seitenwand anlegen und den Wand-Befestigungswinkel unverdrehbar festlegen.

Die Erfindung wird anhand eines in den Zeichnungen dargestellten Ausführungsbeispiels näher erläutert. Es zeigt:

Fig. 1 in perspektivischer Ansicht den Schrankkorpus eines Schaltschrankes für eine Wandbefestigung und

Fig. 2 eine perspektivische vergrößerte Teilansicht eines Eckbereiches des Schrankkorpus.

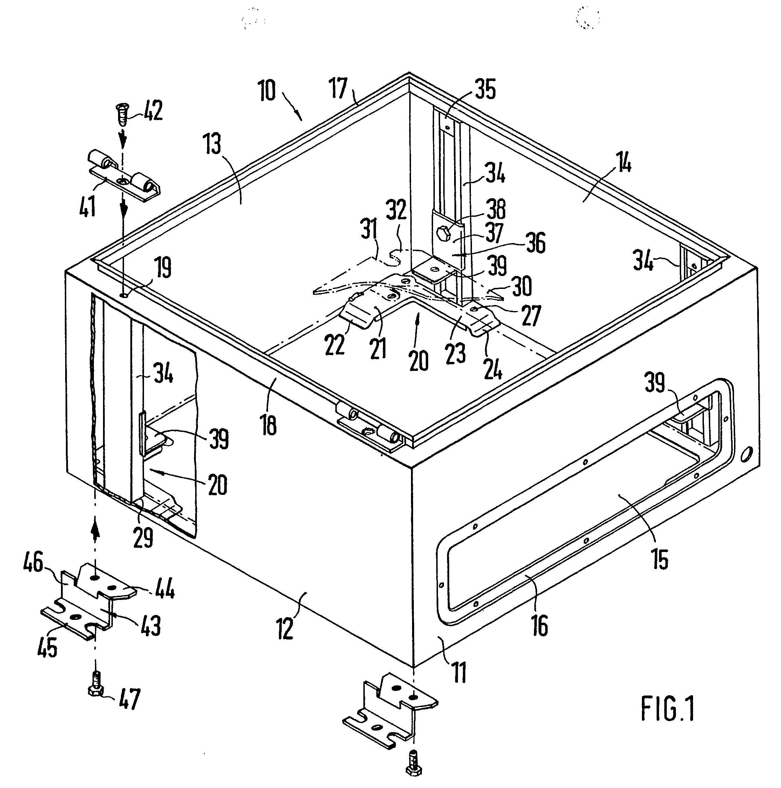

Der boxartige Schrankkorpus 10 des Ausführungsbeispiels hat etwa quadratischen Querschnitt, wie Fig. 1 zeigt, und umfaßt die vier Seitenwände 11, 12, 13 und 14 sowie die Rückwand 15. In die Seitenwand 11 ist die Einführöffnung 16 eingebracht, die zur Einführung von Kabeln dient und mittels an sich bekannter Kabeleinführungen oder dgl. verschlossen werden kann. Im Bereich der offenen Seite des Schrankkorpus 10 sind die Seitenwände 11 bis 14 im rechten Winkel nach innen abgekantet und bilden den umlaufenden Schließrand 18, der in den etwa senkrecht nach außen abstehenden umlaufenden Schließsteg 17 ausläuft. In den Schließrand 18 können Bohrungen 19 und/oder Gewindeaufnahmen eingebracht sein, so daß z.B. ein Schrankdeckel mit dem Schließrand 18 verschraubt werden kann. Der Schließsteg 17 kann dabei mit einem Dichtungselement an dem Schrankdeckel zusammenarbeiten, um einen dichten Abschluß des Schrankkorpus 10 zu erreichen. An dem Schließrand 18 können auch Scharnierteile 41 befestigt werden, an denen eine Schranktür angelenkt werden kann, wie noch gezeigt wird.

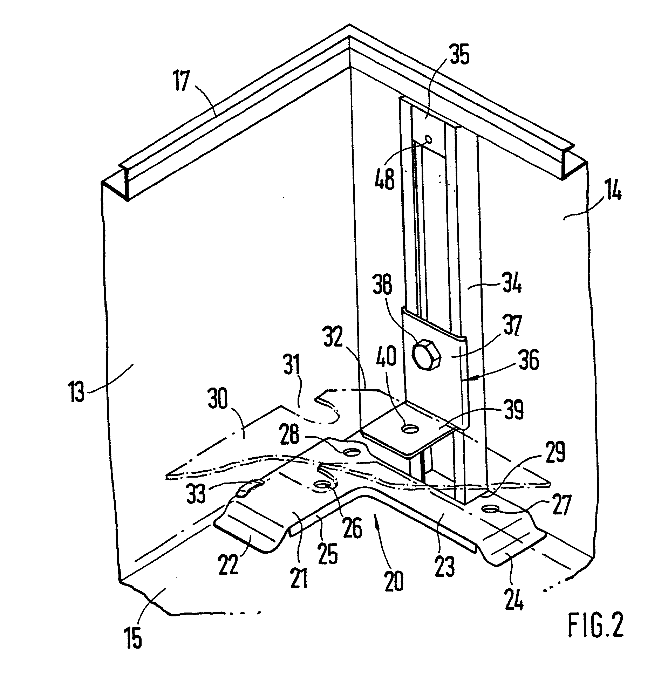

In den vier Eckbereichen des Schrankkorpus 10 werden Montagewinkel 20 auf der Innenseite der Rückwand 15 befestigt, die eine wesentliche Erhöhung der Stabilität des Schrankkorpus 10 gerade in den für die Wandbefestigung verwendeten Bereichen der Rückwand 15 bringen. Die beiden Schenkel 21 und 23 der Montagewinkel 20 liegen in einer Ebene, die parallel und im Abstand zur Rückwand 15 verläuft. Der Abstand wird einfach dadurch eingehalten, daß die Schenkel 21 und 23 an ihren Schenkellängskanten mit Abkantungen 25 versehen sind, die sich auf der Rückwand 15 abstützen. Die Schenkelstirnseiten der Schenkel 21 und 23 sind ebenfalls mit Abkantungen 22 und 24 versehen, die in Endabschnitte auslaufen, welche parallel zur Rückwand 15 gerichtet und mit dieser verbunden, vorzugsweise verschweißt sind. Die Schenkel 21 und 23 der Montagewinkel 20 tragen Gewindeaufnahmen 26, 27 und 28, wobei die Gewindeaufnahme 28 auf der Diagonalen des Montagewinkels 20 liegt. Der Schenkel 21 des Montagewinkels 20, der im Eckbereich mit den Seitenwänden 13 und 14 angebracht ist, weist an der äußeren Schenkellängsseite die Abstützausprägung 33 für die Montageplatte 30 auf, die auf der der Rückwand 15 abgekehrten Seite an dem Schenkel 21 vorsteht. Der Schenkel 23 weist an der äußeren Schenkellängsseite die Aussparung 29 auf, die die Halfenleiste 34 festhält, die sich von der Rückwand 15 bis zum Schließrand 18 erstreckt. Damit ist das untere Ende der Halfenschiene 34 gehalten und es braucht nur noch das obere Ende mit dem Schließrand 18 des Schrankkorpus 10 verschraubt zu werden. Dazu wird in die Halfenschiene 34 die Einlegemutter 35 eingebracht, die neben der vom Innenraum des Schrankkorpus 10 aus zugänglichen Gewindeaufnahme 48 auch in der dem Schließrand 18 zugekehrten Stirnseite eine Gewindeaufnahme aufweist, in die die durch die Bohrung 19 eingeführte Befestigungsschraube 42 eingeschraubt werden kann. Die in die Halfenschiene 34 eingeführte Einlegemutter 35 ist nach dem Einführen ja nur noch in der Halfenschiene 34 längsverstellbar, aber nicht mehr quer zur Halfenschiene 34 abnehmbar. Mit einer gleichen Einlegemutter 35 kann an der Halfenschiene 34 auch der Befestigungswinkel 36 mit seinem Schenkel 37 befestigt werden, wie die Befestigungsschraube 38 in Fig. 2 zeigt. Der in den Innenraum des Schrankkorpus 10 ragende Schenkel 39 des Befestigungswinkels 36 kann zur Befestigung von Einbauten, z.B. einer Montageplatte 30, verwendet werden, die einen größeren Abstand zur Rückwand 15 einnimmt. Die Montageplatte 30 ist mit Ausnehmungen 31 und/oder Abschrägungen 32 versehen, die den Zugang zu den Gewindeaufnahmen 26, 27 und 28 der Montagewinkel 20 ermöglichen.

Mit den Befestigungsschrauben 42 können zusätzlich die Scharnierteile 41 mit dem Schließrand 18 des Schrankkorpus 10 verbunden werden, an denen die mit der Schranktür verbundenen Scharnierteile angelenkt werden.

So wie in dem Eckbereich mit den Seitenwänden 13 und 14 wird in dem Eckbereich mit den Seitenwänden 11 und 12 ein identischer Montagewinkel 20 angebracht. In den beiden Eckbereichen mit den Seitenwänden 12 und 13 bzw. 14 und 11 sind Montagewinkel 20 verwendet, bei denen die Schenkel 21 und 23 vertauscht sind, damit die beiden Paare von Halfenschienen 34 auf den Innenseiten der beiden einander gegenüberliegenden Seitenwänden 12 und 14 angebracht werden können.

Die Rückwand 15 ist im Bereich der auf der Diagonalen liegenden Gewindeaufnahme 28 mit einer Bohrung versehen, durch die die Befestigungsschraube 47 einführbar und in die Gewindeaufnahme 28 einschraubbar ist. Mit der Befestigungsschraube 47 wird der Z-förmige Wand-Befestigungswinkel 43 mit der Rückwand 15 verbunden. Dabei wird die Befestigungsschraube 47 durch eine Bohrung im Schenkel 44 geführt. Der Mittelschenkel 46 legt sich dabei mit Verlängerungen an die Außenseite der Seitenwand, während der Schenkel 45 am Schrankkorpus 10 absteht und zur Wandbefestigung verwendet wird. Die Wand-Befestigungswinkel 43 können dabei in zwei um 90° verdrehten Stellungen unverdrehbar mit der Rückwand 15 verbunden werden, so daß die Schenkel 45 der beiden in Fig. 1 dargestellten Wand-Befestigungswinkel 43 beide an der Seitenwand 12 oder der eine Schenkel 45 des einen Wand-Befestigungswinkels 43 an der Seitenwand 11 und der andere Schenkel 45 des anderen Wand-Befestigungswinkels 43 an der Seitenwand 13 vorstehen. Aus diesem Grunde tragen die Schenkel 44 der Wand-Befestigungswinkel 43 zwei Bohrungen in entsprechendem Abstand.

**Ansprüche**

1. Schaltschrank für eine Wandbefestigung mit einem boxartigen, aus Rückwand und vier Seitenwänden bestehenden Schrankkorpus, dessen offene Seite mittels eines Schrankdeckels oder einer Schranktür verschließbar ist,
dadurch gekennzeichnet,
daß in allen vier Eckbereichen auf der Innenseite der Rückwand (15) ein Montagewinkel (20) angebracht ist, dessen mit Gewindeaufnahmen (26,27,28) versehene Schenkel (21,23) in einer zur Rückwand (15) parallelen und im Abstand dazu befindlichen Ebene angeordnet sind und mit den äußeren Schenkellängsseiten an den aufeinanderstoßenden Seitenwänden (11,12; 12,13; 13,14; 14,11) anliegen,

daß mindestens eine äußere Schenkellängsseite eines Schenkels (z.B. 23) mit einer Aussparung (29) zum Festlegen einer im Bereich der offenen Seite des Schrankkorpus (10) festgeschraubten Halfenschiene (34) versehen ist, und
daß zumindest eine Gewindeaufnahme (z.B. 28) jedes Montagewinkels (20) über eine Bohrung der Rückwand (15) zugänglich ist.

2. Schaltschrank nach Anspruch 1,
dadurch gekennzeichnet,
daß die Schenkel (21,23) der Montagewinkel (20) an ihren Schenkellängsseiten und Schenkelstirnseiten mit Abkantungen (22,24,25) versehen sind, die sich auf der Innenseite der Rückwand (15) abstützen, den Abstand der Schenkel (21,23) zur Rückwand (15) festlegen und zumindest teilweise mit der Rückwand (15) verbunden, vorzugsweise verschweißt sind.

3. Schaltschrank nach Anspruch 2,
dadurch gekennzeichnet,
daß die Schenkelstirnseiten der Schenkel (21,23) mit ihren Abkantungen (22,24) in zur Ebene der Schenkel (21,23) parallel liegende Endabschnitte auslaufen, die mit der Rückwand (15) verbunden, vorzugsweise verschweißt sind.

4. Schaltschrank nach einem der Ansprüche 1 bis 3,
dadurch gekennzeichnet,
daß zumindest ein Schenkel (z.B. 21) der Montagewinkel (20) mit einer Abstützausprägung (33) für eine Montageplatte (30) versehen ist, die an der der Rückwand (15) abgekehrten Seite des Schenkels (21) absteht, und daß die Montageplatte (30) im Bereich der Gewindeaufnahmen (26,27,28) mit Ausnehmungen (31) oder Abschrägungen (32) versehen ist.

5. Schaltschrank nach Anspruch 4,
dadurch gekennzeichnet,
daß die Abstützausprägung (33) für die Montageplatte (30) an dem einen Schenkel (21) und die Aussparung (29) für die Halfenleiste (34) an dem anderen Schenkel (23) des Montagewinkels (20) jeweils im Bereich der äußeren Schenkellängsseite angeordnet sind.

6. Schaltschrank nach Anspruch 5,
dadurch gekennzeichnet,
daß zwei Ausführungen von Montagewinkeln (20) mit vertauschten Schenkeln (21,23) verwendet sind, wobei jeweils zwei identische Montagewinkel (20) in den auf einer Diagonalen liegenden Eckbereichen angebracht sind.

7. Schaltschrank nach einem der Ansprüche 1 bis 6,
dadurch gekennzeichnet,
daß eine Gewindeaufnahme (28) des Montagewinkels (20) auf der Diagonale der Schenkel (21,23) angeordnet ist.

8. Schaltschrank nach einem der Ansprüche 1 bis 7,

dadurch gekennzeichnet,

daß die offene Seite des Schrankkorpus (10) mit einem Schließrand (18) und einem Schließsteg (17) versehen ist,

daß die oberen Enden der Halfenschienen (34) Einlegemuttern (35) mit stirnseitiger Gewindeaufnahme aufnehmen und

daß Befestigungsschrauben (42) über Bohrungen (11) im Schließrand (18) des Schrankkorpus (10) in die stirnseitigen Gewindeaufnahmen der Einlegemuttern (35) eingeschraubt sind.

9. Schaltschrank nach Anspruch 8,

dadurch gekennzeichnet,

daß die Befestigungsschrauben (42) zusätzlich zum Festschrauben von Scharnierteilen (41) am Schließrand (18) des Schrankkorpus (10) mit verwendet sind.

10. Schaltschrank nach einem der Ansprüche 1 bis 9,

dadurch gekennzeichnet,

daß an die Rückwand (15) von außen Z-förmige Wand-Befestigungswinkel (43) anschraubbar sind, wobei mindestens eine Befestigungsschraube (47) einen Schenkel (44) desselben durch die Bohrung der Rückwand (15) hindurch mit einer Gewindeaufnahme (z.B. 28) der Montagewinkel (20) verschraubt, Verlängerungen des Mittelschenkels (46) des Wand-Befestigungswinkels (43) sich an die Außenseite einer Seitenwand (11,12, 13,14) anlegen und den Wand-Befestigungswinkel (43) unverdrehbar festlegen.

FIG.1

FIG.2

7148